# EUROPÄISCHE PATENTSCHRIFT

(11) **EP 0 498 202 B1**
(45) Veröffentlichungstag und Bekanntmachung des Hinweises auf die Patenterteilung: **27.03.1996**
(21) Anmeldenummer: 92100881.9
(22) Anmeldetag: 20.01.1992
(51) Int. Cl.: G05D 27/02, G05B 5/01

(54) **Elektropneumatischer Stellungsregler**
Electropneumatic position controller
Régulateur électromagnétique de position

(30) Priorität: 05.02.1991 DE 4103422
(43) Veröffentlichungstag der Anmeldung: 12.08.1992
(73) Patentinhaber: SIEMENS AKTIENGESELLSCHAFT, D-80333 München (DE)
(72) Erfinder: Bork, Peter, W-7500 Karlsruhe 21 (DE)

(56) Entgegenhaltungen:
- DE-A- 2 101 761
- DE-A- 2 749 765
- DE-A- 2 951 758
- DE-A- 3 625 913
- ATP, Band 31, Nr. 8, 1989, MUnchen B. KOENIG "Ein "intelligenter"elektropneumatischer Stellungsregler", Seiten 367-373

## Beschreibung

Die Erfindung betrifft einen elektropneumatischen Stellungsregler mit schaltendem Ausgang gemäß dem Oberbegriff des Anspruchs 1.

In der Zeitschrift "atp" 31 (1989) 8, Seiten 367 bis 373 ist ein derartiger elektropneumatischer Stellungsregler beschrieben. Die Stellimpulse, mit denen in den beiderseits an die Unempfindlichkeitszone sich anschließenden Zonen geringer Abweichung das Stellglied betätigt wird, sind durch Puls-Breiten-Modulation in Abhängigkeit vom Verhalten der Regelstrecke gebildet; sie haben daher unterschiedliche Dauer. Diese Zonen haben für die beiden Stellrichtungen gleiche Breite und werden, bei der Inbetriebnahme einmal eingestellt, während des Regelbetriebs nicht mehr verändert. Da zur Adaption während des Regelbetriebes die Stellimpulslänge ständig neu berechnet wird, ist ein komplexer Regelalgorithmus und ein entsprechend leistungsfähiger Prozessor erforderlich.

Der vorliegenden Erfindung liegt die Aufgabe zugrunde, einen elektropneumatischen Regler der im Oberbegriff des Anspruchs 1 angegebenen Art zu schaffen, der sich durch geringen Rechenaufwand auszeichnet und auf einfache Weise selbsttätig in Betrieb gesetzt werden kann.

Erfindungsgemäß wird diese Aufgabe mit den im kennzeichnenden Teil des Anspruchs 1 angegebenen Maßnahmen gelöst.

Zur Adaption des Reglers an während des Betriebs auftretenden Änderungen des Regelverhaltens wird vorteilhaft bei Auftreten von Regelschwingungen die Unempfindlichkeitszone unter Beibehaltung der Breiten der Langsamgangzonen derart verbreitert, daß die Regelschwingungen verschwinden. In bestimmten Zeitabständen wird dann die Breite der Unempfindlichkeitszone schrittweise verkleinert, bis die ursprüngliche Breite ohne Auftreten von Regelschwingungen erreicht ist.

Anhand der Zeichnungen werden im folgenden die Erfindung sowie deren Ausgestaltungen und Ergänzungen näher beschrieben und erläutert.
- Figur 1: zeigt das Prinzipschaltbild eines elektropneumatischen Stellungsregelkreises,
- Figur 2: veranschaulicht das Verhalten des neuen Reglers.

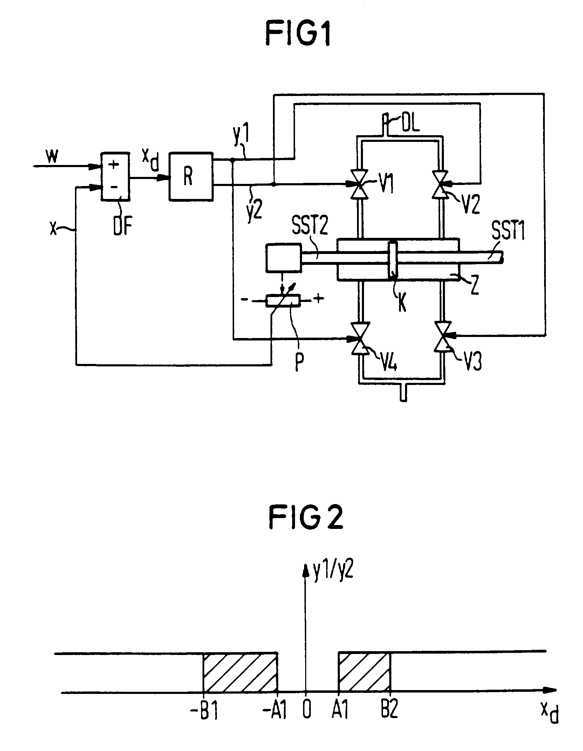

In Figur 1 ist mit Z der Zylinder eines pneumatischen Stellantriebs bezeichnet, der von einem Stellkolben K in zwei Kammern unterteilt ist. Über Schubstangen SST1, SST2, die am Kolben K befestigt sind, kann die Kolbenbewegung auf nicht dargestellte Stellglieder übertragen werden. Der Zylinder Z ist über Ventile V1, V2 an eine Druckluftleitung anschließbar. Über Abblasventile V3, V4 kann die Luft aus je einer Zylinderkammer nach außen abgeführt werden. Durch Öffnen der Ventile V1, V3 wird der Zylinder nach rechts, durch Öffnen der Ventile V2, V4 nach links gedrückt. Mit der Schubstange SST2 ist ein Potentiometer P verbunden, an dem eine der Stellung des Stellkolbens K entsprechende Spannung abgegriffen und als Istwert x einer Einheit DF zugeführt wird, welche sie von einem Sollwert w subtrahiert. Das Ausgangssignal, die Regeldifferenz x_{d}, wird einem Regler R zugeführt, der mit Stellgrößen y1, y2 die Ventile V1, V2, V3, V4 ansteuert.

Anhand des Diagramms der Figur 2 wird im folgenden die Funktion des Stellungsreglers nach Figur 1 näher erläutert. Ist die Regeldifferenz x_{d} kleiner als -B1 oder größer als + B2 (Schnellgangzonen), ist eine der Stellgrößen y1, y2 ein permanentes Signal, so daß die Ventile V1, V3 bzw. V2, V4 ständig geöffnet sind und der Stellkolben in die Richtung bewegt wird, in der die Regeldifferenz x_{d} verkleinert wird. Der Stellkolben wird dabei mit maximaler Geschwindigkeit verschoben. Er muß daher rechtzeitig vor Erreichen der Regeldifferenz x_{d} = 0 abgebremst werden, damit er nicht über diese hinausläuft und Regelschwingungen entstehen. Nach Unter- bzw. Überschreiten der Regeldifferenz B2 bzw. -B1 (Langsamgangzonen) wird daher das permanente Stellsignal abgeschaltet, und es werden den Ventilen V1, V3 bzw. V2, V4 Stellimpulse zugeführt, die den Kolben mit einer im Mittel geringeren Geschwindigkeit in Richtung x_{d} = 0 bewegen, bis die Regeldifferenz in der Unempfindlichkeitszone -A1/A1 liegt. In dieser Zone werden den Ventilen V1 ... V4 keine Stellimpulse zugeführt. Die Langsamgangzonen A1/B2; -A1/-B1 sind in Figur 2 schraffiert gekennzeichnet. Sie müssen so breit sein, daß der Stellantrieb, von den Schnellgangzonen kommend, spätestens in der Unempfindlichkeitszone stehenbleibt, ohne daß es zu Regelkreisschwingungen kommt. Sind sie zu breit, dauert der Regelabgleich zu lange. Ihre Breite ist daher für die Qualität des Stellungsreglers von wesentlicher Bedeutung.

Da pneumatische Stellantriebe für die beiden Stellrichtungen unterschiedliche Stellzeiten und auch unterschiedlich großen Nachlauf haben können, sind die beiden Langsamgangzonen entsprechend unterschiedlich breit. Je höher die Stellgeschwindigkeit und je größer der Nachlauf ist, um so breiter muß die Langsamgangzone sein, damit in dieser die hohe Stellgeschwindigkeit sicher abgebaut und der Nachlauf gemindert wird. Die Impulslänge in den Langsamgangzonen wird um so kürzer gehalten, je höher die Stellgeschwindigkeit und je größer der Nachlauf ist.

Erfindungsgemäße elektropneumatische Stellungsregler können selbsttätig in Betrieb gesetzt werden. Dabei wird zweckmäßig zunächst der Stellweg erfaßt. Der Stellantrieb wird dazu in die beiden Endlagen gebracht. Die zugehörigen Stellungen des Potentiometers P werden erfaßt. Dessen Versorgungsspannung kann dann so eingestellt werden, daß sein dem Stellungsbereich entsprechender Signalbereich in gewünschter Weise angepaßt ist.

Die Stellzeit ist ein wesentlicher regelungsdynamischer Parameter; sie ist deshalb von großer Bedeutung für die Bestimmung der Stellungsreglerparameter. Sie wird für die beiden Stellrichtungen getrennt erfaßt.

Die Stellimpulslängen für den Langsamgang in den Zonen -B1/-A1; A1/B2 werden vorteilhaft in drei Phasen ermittelt. In der ersten Phase wird die Impulslänge aus den gemessenen Stellzeiten rechnerisch abgeleitet, und zwar aufgrund der gewünschten Stellungsänderung je Stellimpuls. Soll z. B. je Impuls eine Stellungsänderung von 0,2 % des gesamten Stellweges erreicht werden, so müßte die Impulslänge theoretisch auch 0,2 % der Stellzeit sein. Je nach dem verwendeten elektropneumatischen Umsetzer kann der für die gewünschte Stellungsänderung erforderliche Stellimpuls jedoch deutlich länger, z. B. das Zwei- oder Dreifache der theoretisch berechneten Impulslänge, sein. Die Pausenlängen, die zwischen den Stellimpulsen einzuhalten sind, können für beide Stellrichtungen gleich der längeren der beiden ermittelten Impulslängen festgelegt werden.

In der zweiten Phase der Ermittlung der Impuls-Pausen-Folge wird geprüft, ob die ermittelten Impulslängen ausreichen, um das Stellgerät tatsächlich in Bewegung zu setzen. Für beide Stellrichtungen wird getrennt eine bestimmte Anzahl von Impulsen, z. B. 5, ausgegeben. Zwischen den einzelnen Impulsen wird jeweils eine Pause von der vorher ermittelten Länge eingehalten. Die Impulsfolge soll bewirken, daß das zunächst ruhende Stellgerät während der ersten Impulse die Lagerreibung überwindet und die restlichen Impulse zu einer Stellungsänderung führen. Eine Stellgerätebewegung wird dann angenommen, wenn die Impulse im Mittel jeweils einen bestimmten Bruchteil der angestrebten Stellungsänderung je Impuls erreichen, z. B. 50 %. Soll z. B. die Stellungsänderung je Impuls 0,2 % des gesamten Stellweges betragen und enthält die Impulsfolge fünf Impulse, so wird eine Stellgerätebewegung angenommen, wenn die Stellungsänderung größer oder gleich 0,5 % ist. Hat sich das Stellgerät nicht in diesem Sinne bewegt, werden die Impulse um einen bestimmten Betrag verlängert, und es wird erneut eine Impulsfolge ausgegeben. Dieser Vorgang wird so lange wiederholt, bis die gewünschte Stellungsänderung erreicht oder überschritten ist.

In der dritten Phase wird der Feinabgleich der Impulslänge vorgenommen. Es wird wieder je Stellrichtung eine Impulsfolge ausgegeben. Die Impulse werden in feineren Schritten verlängert oder verkürzt, bis die Impuls-/Pausenlängen gefunden sind, die zu der gewünschten Stellungsänderung von z. B. 0,2 % je Impuls führen. Die Länge der Impulspausen wird z. B. gleich der Länge des jeweils längeren Impulses der beiden Stellrichtungen eingestellt.

Schließlich müssen noch die Breiten der Unempfindlichkeits- und der Langsamgangzonen eingestellt werden. Die Breite der Unempfindlichkeitszone ergibt sich aus der gewünschten Auflösung, d. h. aus der Stellungsänderung je Stellimpuls, z. B. ist die Breite für das vorgenannte Beispiel ± 0,2 %. Liegt die Regeldifferenz an den Grenzen A1, -A1 zur Unempfindlichkeitszone, so beseitigt ein Stellimpuls die Regeldifferenz ohne Überschwingen.

Die Zonen des Langsamgangs werden zunächst grob voreingestellt, z. B. auf die Breite der Unempfindlichkeitszone. Der Stellantrieb wird in eine bestimmte Startposition gebracht und dem Regler wird ein solcher Ziel-Sollwert aufgeschaltet, daß die Regeldifferenz in einer der beiden Schnellgangzonen liegt. Der dadurch ausgelöste Dauerstellimpuls verkleinert die Regeldifferenz, bis sie in die Langsamgangzone kommt. Dort lösen die oben beschriebenen Impulse den Dauerimpuls ab, bis die Regeldifferenz die Grenze zur Unempfindlichkeitszone unterschreitet. Die ausgegebenen Impulse werden gezählt. Es hat sich gezeigt, daß die Langsamgangzone eine Breite haben sollte, bei der sich eine bestimmte Impulssumme ergibt, mit der das Stellglied die Langsamgangzone durchfährt. Es wird daher geprüft, ob diese Impulssumme bei der grob eingestellten Zonenbreite erreicht, über- oder unterschritten ist. Ist die Impulszahl kleiner, wird die Breite der Langsamgangzone vergrößert, ist sie größer, wird die Zonenbreite verkleinert.

Bevor der nächste Versuch mit der neuen Zonenbreite gestartet wird, läuft der gleiche Vorgang in der entgegengesetzten Stellrichtung ab, so daß die Zonenbreite für die andere Langsamgangzone in gleicher Weise abgeglichen wird. Dieses iterative Verfahren wird fortgesetzt, bis beide Langsamgangzonen jeweils die Breite erreicht haben, die mit der Sollimpulszahl durchlaufen wird. Es hat sich gezeigt, daß mit so festgelegten Zonenbreiten in Verbindung mit dem oben ermittelten Impulsschema sowohl die hohe Stellgeschwindigkeit in den Schnellgangzonen ausreichend abgebaut, als auch der mögliche Nachlauf des Stellgerätes optimal gemindert wird. Das beschriebene Inbetriebsetzungsverfahren kann während des Reglerbetriebs zur Reglerkorrektur wiederholt werden.

Im Regelbetrieb kann es zu Schwingungen kommen, die von den sich ändernden Eigenschaften des zu regelnden Stellantriebes und den auf ihn einwirkenden Einflußgrößen herrühren. Vorzugsweise wird daher die Breite der Unempfindlichkeitszone während des Regelbetriebs selbsttätig schrittweise an die Regelstrekkeneigenschaften angepaßt, indem sie vergrößert wird, wenn die Regeldifferenz mehrfach die Ansprechgrenzen A1, -A1 wechselseitig überschreitet, der Regelkreis also schwingt. In vorgegebenen Zeitabständen verkleinert der Regler die Breite der Unempfindlichkeitszone jeweils wieder um einen Schritt, so daß die ursprünglich hohe Regelgenauigkeit wieder erreicht wird, sobald es das Regelstreckenverhalten zuläßt. Die Breiten der beiden Langsamgangzonen werden beim Verändern der Breite der Unempfindlichkeitszone beibehalten.

Der neue elektropneumatische Stellungsregler ist für proportional und auch integral wirkende Antriebe geeignet. Wegen seines einfachen Regleralgorithmus ist nur ein geringer Rechenaufwand während des Regelbetriebs erforderlich, so daß ein einfacher, preiswerter Prozessor eingesetzt werden kann.

## Patentansprüche

1. Elektropneumatischer Stellungsregler mit einem elektronischen Regler (R), der in Abhängigkeit einer Regeldifferenz (x_{d}) elektrische Stellsignale (y1, y2) ausgibt, die in pneumatische Stellsignale umgewandelt werden,
- mit denen ein pneumatisches Stellglied (Z, K) angesteuert wird,
- die, wenn die Regeldifferenz in einer die Regeldifferenz (x_{d}) Null einschlieβenden Unempfindlichkeitszone (-A1, A1) liegt, Null sind,
- die, wenn die Regeldifferenz (x_{d}) in zwei jeweils an die Unempfindlichkeitszone (-A1, A1) angrenzenden Langsamgangzonen (-B1, -A1; A1, B2) liegt, Stellimpulse für ein langsames Verstellen des Stellgliedes (Z, K) sind und
- die, wenn die Regeldifferenz (x_{d}) auβerhalb der Langsamgangzonen (-B1, -A1; A1, B2) liegt, permanente Stellsignale zum raschen Verstellen des Stellgliedes (Z, K) sind,
**dadurch gekennzeichnet**,
- daß die Stellimpulse jeder Langsamgangzone (-B1, -A1; A1, B2) konstante Breite und Abstände haben und
- daβ die Breite der Unempfindlichkeitszone (-A1, A1) so eingestellt ist, daβ bei gegebener Impulsbreite im Falle einer in einer Langsamgangzone (-B1, -A1; A1, B2) nahe an der Grenze zur Unempfindlichkeitszone (-A1, A1) liegenden Regeldifferenz (x_{d}) das Stellglied (Z, K) durch einen einzigen Impuls um eine solche Strecke verstellt wird, daβ danach die Regeldifferenz (x_{d}) innerhalb der Unempfindlichkeitszone (-A1, A1) liegt.

2. Stellungsregler nach Anspruch 1, **dadurch gekennzeichnet**, daß die Impuls-/Pausenlängen der Stellimpulse der Langsamgangzonen während der selbsttätig ablaufenden Inbetriebsetzung so eingestellt sind, daß eine mittlere Verstellung des Stellgliedes je Impuls bewirkt wird, die der gewünschten Auflösung des Stellweges entspricht.

3. Stellungsregler nach Anspruch 2, **dadurch gekennzeichnet**, daß während der selbsttätig ablaufenden Inbetriebsetzung die Stellzeit für den gesamten Stellweg je Stellrichtung gemessen wird und daß, ausgehend von der der Auflösung entsprechenden Impulsdauer, die Impuls-/ Pausenlängen empirisch ermittelt werden.

4. Stellungsregler nach Anspruch 2 oder 3, **dadurch gekennzeichnet,** daß die Pausenlänge etwa gleich der Impulslänge ist.

5. Stellungsregler nach Anspruch 3, **dadurch gekennzeichnet**, daß die Pausenlänge gleich der längeren der beiden Impulslängen ist.

6. Stellungsregler nach Anspruch 1 bis 5, **dadurch gekennzeichnet,** daß die Breite der Unempfindlichkeitszone gleich der Stellwegauflösung ist.

7. Stellungsregler nach Anspruch 1 bis 6, **dadurch gekennzeichnet,** daß die Breite der Langsamgangzonen einer bestimmten Stellimpulszahl entspricht.

8. Stellungsregler nach Anspruch 1 bis 7, **dadurch gekennzeichnet,** daß bei Auftreten von Regelschwingungen die Unempfindlichkeitszone unter Beibehaltung der Breiten der Langsamgangzonen verbreitert wird und daß in bestimmten Zeitabständen die Unempfindlichkeitszone schrittweise verkleinert wird, bis die ursprüngliche Breite ohne Auftreten von Regelschwingungen erreicht ist.

## Claims

1. Electropneumatic positioner having an electronic controller (R) which in dependence upon a control difference (x_{d}) emits electrical actuating signals (y1, y2) which are converted into pneumatic actuating signals,
- with which a pneumatic actuator (Z, K) is controlled,
- which are zero if the control difference lies in an insensitivity region (-A1, A1) including the control difference (x_{d}) zero,
- which, if the control difference (x_{d}) lies in two slow speed regions (-B1, -A1; A1, B2) each bordering the insensitivity region (-A1, A1), are actuating pulses for a slow adjustment of the actuator (Z, K), and
- which, if the control difference (x_{d}) lies outside the slow speed regions (-B1, -A1; A1, B2), are permanent actuating signals for the rapid adjustment of the actuator (Z, K),
characterized in that
- the actuating pulses of each slow speed region (-B1, -A1; A1, B2) have constant width and intervals, and
- the width of the insensitivity region (-A1, A1) is adjusted in such a way that with given pulse width in the case of a control difference (x_{d}) lying in a slow speed region (-B1, -A1; A1, B2) close to the border with the insensitivity region (-A1, A1) the actuator (Z, K) is adjusted by a single pulse by such a distance that thereafter the control difference (x_{d}) lies within the insensitivity region (-A1, A1).

2. Positioner according to claim 1, characterized in that the pulse/pause lengths of the actuating pulses of the slow speed regions during the period of putting into operation which occurs automatically are adjusted in such a way that an average adjustment of the actuator per pulse is effected which corresponds to the desired resolution of the actuator travel.

3. Positioner according to claim 2, characterized in that during the period of putting into operation which occurs automatically the actuating time for the entire actuator travel is measured per actuating direction and in that, proceeding from the pulse duration corresponding to the resolution, the pulse/pause lengths are empirically determined.

4. Positioner according to claim 2 or 3, characterized in that the pause length is approximately the same as the pulse length.

5. Positioner according to claim 3, characterized in that the pause length is equal to the longer of the two pulse lengths.

6. Positioner according to claims 1 to 5, characterized in that the width of the insensitivity region equals the actuator travel resolution.

7. Positioner according to claims 1 to 6, characterized in that the width of the slow speed regions corresponds to a certain number of actuating pulses.

8. Positioner according to claims 1 to 7, characterized in that with the occurrence of control oscillations the insensitivity region is widened while maintaining the widths of the slow speed regions and in that at certain intervals the insensitivity region is gradually reduced until the original width is achieved without the occurrence of control oscillations.

## Revendications

1. Régulateur électropneumatique de position comportant un régulateur électronique (R), qui fournit, en fonction d'une différence de réglage (x_{d}), des signaux électriques de réglage (y1, y2), qui sont convertis en des signaux pneumatiques de réglage,
- par lesquels un organe pneumatique de réglage (Z, K) est commandé,
- qui sont nuls, lorsque la différence de réglage est dans une zone d'insensibilité (-A1, A1), qui comprend la différence de réglage (x_{d}) nulle,
- qui sont des impulsions de réglage pour un déplacement lent de l'organe de réglage (Z, K), lorsque la différence de réglage (x_{d}) est dans deux zones de déplacement lent (-B1, -A1; A1, B2) qui sont respectivement contiguës à la zone d'insensibilité (-A1, A1), et
- qui sont des signaux de réglage permanents pour le déplacement rapide de l'organe de réglage (Z, K), lorsque la différence de réglage (x_{d}) est en dehors des zones de déplacement lent (-B1, -A1; A1, B2),
caractérisé par le fait
- que les impulsions de réglage de chaque zone de déplacement lent (-B1, -A1; A1, B2) ont une largeur constante et des distances l'une à l'autre constantes, et
- la largeur de la zone d'insensibilité (-A1, A1) est réglée de telle sorte que, pour une largeur donnée d'impulsions, dans le cas où la différence de réglage (x_{d}) est dans une zone de déplacement lent (-B1, -A1; A1, B2) à proximité de la limite avec la zone d'insensibilité (-A1, A1), l'organe de réglage (Z, K) est déplacé par une seule impulsion sur une distance telle qu'ensuite la différence de réglage (x_{d}) soit à l'intérieur de la zone d'insensibilité (-A1, A1) .

2. Régulateur de position suivant la revendication 1, caractérisé par le fait que les longueurs des impulsions de réglage/des pauses entre impulsions de réglage de la zone de déplacement lent sont réglées, pendant la mise en service s'effectuant automatiquement, de sorte à provoquer à chaque impulsion un déplacement moyen de l'organe de réglage, qui correspond à la résolution souhaitée de la course de réglage.

3. Régulateur de position suivant la revendication 2, caractérisé par le fait que pendant la mise en service s'effectuant automatiquement, la durée de réglage pour l'ensemble de la course de réglage est mesurée dans chaque direction et que les longueurs des impulsions ou des pauses entre impulsions sont déterminées de façon empirique à partir de la durée des impulsions, qui correspond à la résolution.

4. Régulateur de position suivant la revendication 2 ou 3, caractérisé par le fait que la longueur des pauses entre impulsions est égale approximativement à la longueur des impulsions.

5. Régulateur de position suivant la revendication 3, caractérisé par le fait que la longueur des pauses entre impulsions est égale à la plus longue des deux longueurs d'impulsions.

6. Régulateur de position suivant l'une des revendications 1 à 5, caractérisé par le fait que la largeur de la zone d'insensibilité est égale à la résolution de la course de réglage.

7. Régulateur de position suivant l'une des revendications 1 à 6, caractérisé par le fait que la largeur des zones de déplacement lent correspond à un nombre déterminé d'impulsions de réglage.

8. Régulateur de position suivant l'une des revendications 1 à 7, caractérisé par le fait que, lors de l'apparition d'oscillations de réglage, la zone d'insensibilité est élargie tout en conservant les largeurs des zones de déplacement lent et qu'à des intervalles de temps déterminés, la zone d'insensibilité est réduite pas-à-pas jusqu'à ce que la largeur initiale soit atteinte sans apparition d'oscillations de réglage.
